Europäisches Patentamt

European Patent Office

Office européen des brevets

(11) Publication number: **0 469 720 A2**

# EUROPEAN PATENT APPLICATION

(21) Application number: **91305925.9**

(22) Date of filing: **01.07.91**

(51) Int. Cl.5: **G01M 11/00**

(30) Priority: **03.08.90 GB 9017077**

(43) Date of publication of application:
**05.02.92 Bulletin 92/06**

(84) Designated Contracting States:
**DK FR IT**

(71) Applicant: **GPT LIMITED**
**New Century Park P.O. Box 53**
**Coventry, CV3 1HJ(GB)**

(72) Inventor: **Thorley, Anthony Michael**
**9 Ascot Close, Bedworth**
**Nr. Nuneaton, Warwickshire, CV12 8TB(GB)**

(74) Representative: **MacKenzie, Ian Alastair**
**Robert et al**
**The General Electric Company, p.l.c. Central**
**Patent Department Wembley Office Hirst**
**Research Center East Lane**
**Wembley Middlesex HA9 7PP(GB)**

(54) **Optical fibre monitoring.**

(57) The invention concerns apparatus for monitoring optical fibres by detecting variations in the polarisation of light being transmitted through the fibre. In one embodiment the optical fibre carries non-coherent light and the incoming light is split by a passive splitter (2) connected to a polarisation beam splitter (5) variations in the output of this polarisation beam splitter are detected, amplified and filtered so that they can be compared with a preset reference voltage. A counter (12) is used to detect variations. Another embodiment relates to the detection of polarisation variations in coherent systems.

Fig. 1.

POLARISATION FLUCTUATION DETECTOR

The present invention concerns the monitoring of optical fibres. These are becoming increasingly important in the field of data transmission. In optical fibre data transmission systems physical movement of the fibres can cause the transmission characteristics of the fibres to vary and it is becoming increasingly important to be capable of monitoring the outputs of optical fibres in such a manner as to be able to detect when the fibres have undergone unwanted perturbations. It is already known that movements of fibres carrying optical signals causes variation in the polarisation of the light carrying the signals. The present invention proposes using this to monitor the fibres.

Accordingly the invention comprises means for detecting variations in the polarisation of light being transmitted through an optical fibre being monitored.

In order that the present invention may be more readily understood various embodiments thereof will now be described by way of example and with reference to the accompanying drawings, in which:

Figure 1 is a block diagram of a first embodiment of a polarisation fluctuation detector,

Figure 2 is a block diagram of a second embodiment and

Figure 3 is a similar diagram of a third embodiment.

Before describing the embodiments it will be appreciated that data transmission down an optical fibre can be carried out either with non-coherent light or with coherent light the polarisation of which is controlled.

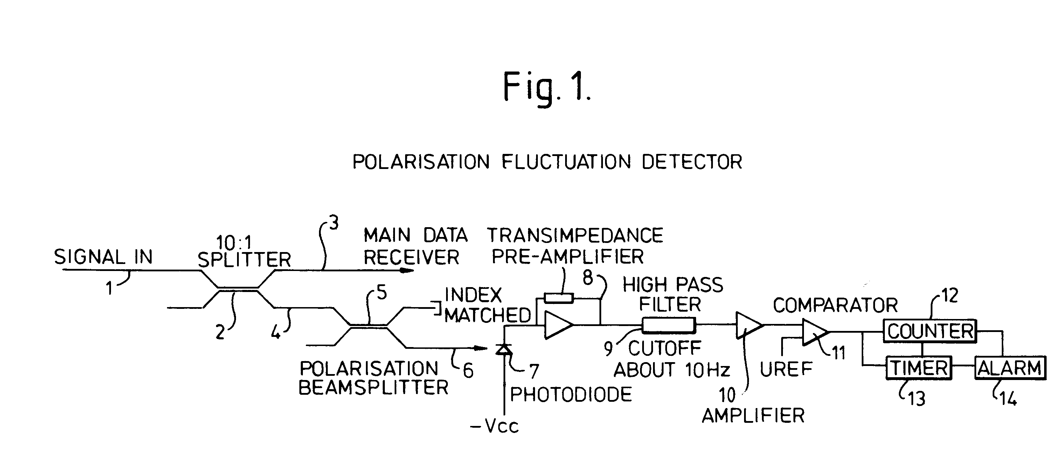

Figure 1 shows a polarisation fluctuation detector for monitoring the optical fibres of a non-coherent system. In Figure 1 an incoming signal is shown at 1 and this signal is sampled by a 10:1 passive splitter 2. Such a splitter introduces less than 1 dB loss into the signal path. The main signal path continues at 3 to a main data receiver which is conventional and which is not shown in the drawing. The low ratio arm 4 of the splitter 2 is taken to a polarisation beam splitter 5. As the polarisation of the signal light varies the power exiting the polarisation beam splitter 5 from either arm will vary from 0 to the maximum beam splitter input power. Only one arm 6 of the polarisation beam splitter 5 has to be monitored. The exiting light from this arm 6 is detected with a photodiode 7 and a transimpedance pre-amplifier 8 is used to convert the photo current into voltage fluctuations. This pre-amplifier 8 can have a much lower bandwith than the main signal amplifier because only polarisation fluctuation frequencies below 1 KHz are of interest. A high pass filter 9 removes frequencies below 10 Hz. This removes all polarisation fluctuations caused by natural changes in the fibre characteristic which occur at frequencies below 1 Hz. The filtered signal is amplified in a gain stage indicated at 10 and the amplified signal compared with a pre-set reference voltage by a comparator 11. Under normal circumstances the output of comparator 11 will be constant. When the optical fibre being monitored is disturbed the comparator output will rapidly switch as the disturbances cause polarisation fluctuation in the light signal. The changes of state of the comparator 11 are counted in a counter 12 and a timer 13 is triggered by the first output change of the comparator. After a predetermined delay the timer 13 causes the counter to be read. If the count of the counter 12 exceeds a preset value then an alarm 14 is triggered. The purpose of the counter and its associated timer together with filter 9 is to ensure that no alarm is triggered unless the fibre polarisation changes at above 10 Hz for the time set by the timer. This is intended to eliminate false alarms.

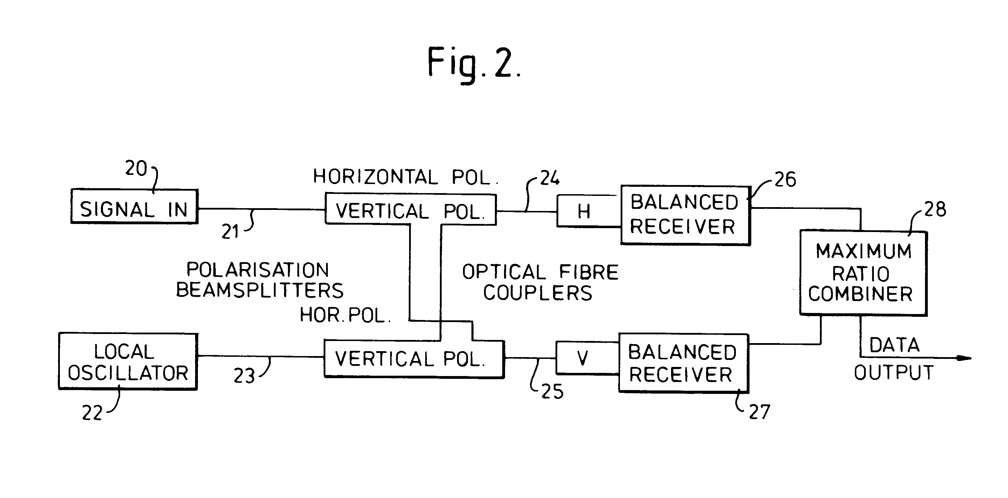

Referring now to Figure 2 of the accompanying drawings this shows a system for monitoring polarisation fluctations in optical fibres of a coherent optical transmission system. In such a system polarisation fluctuations in the data signal have to be prevented to stop the fluctuation causing data errors. In figure 2 the incoming coherent signal is shown at 20 and this signal is split into two orthogonal states of polarisation by appropriate polarisation beam splitters generally indicated at 21. The output of a local oscillator 22 is also split by polarisation beam splitters 23 into two orthogonal states. The outputs from the beam splitters 21 and 23 are mixed to provide two signals at 24 and 25 which fall upon two receivers 26 and 27, the receiver 26 being for the horizontally polarised signals and the receiver 27 for the vertically polarised signals. The outputs of the receivers 26 and 27 are combined in a maximum ratio combiner 28 the output 29 of which is the data output. The system just described is intended to compensate for fluctuations in polarisation so that the data can be extracted correctly. It will be appreciated that as the polarisation fluctuates the signals received by the receivers 26 and 27 will vary inversely with respect to each other. Accordingly in the present embodiment the output of the receivers 26 and 27 are monitered at 28 which detects large changes in the state of polarisation of a frequency greater than a fixed value, which value may for example be 10 Hz.

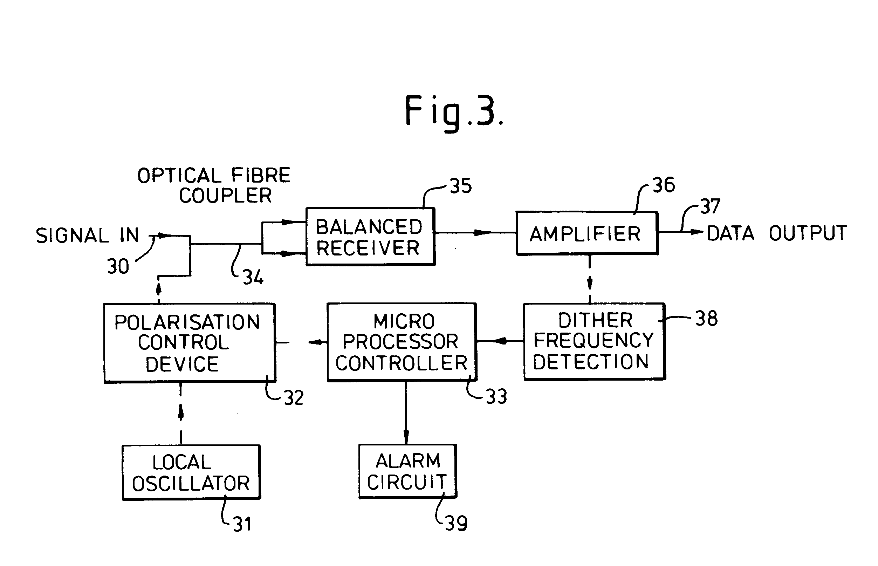

Referring now to Figure 3 of the drawings this also relates to a coherent light system but in this embodiment the incoming signal 30 is left unaffected. In the Figure 3 embodiment a local oscillator 31 and a polarisation control device 32 is used to change the state of polarisation of the local oscillator 31 to match of the signal 30. The polarisation control device 32 can take many forms such as fibre squeezers, fibre stretchers, liquid crystal cells or Lithium Niobate elements. In any of these forms the control device 32 consists of several elements and each element has a control voltage applied with a small dither signal. A slightly different dither frequency is applied to each element. The application of the dither frequencies is controlled by a micro-processor controller 33 which calculates how to adjust each element in the polarisation control device 32 to match the local oscillators polarisation state to that of the incoming signal 30. In order to do this the output of the polarisation control device 32 and the incoming signal 30 are combined in an optical fibre coupler 34 and taken to a balanced receiver 35 the output of which is amplified at 36 to provide the data output 37 with the amplifier 36 also being connected to a dither frequency detection circuit 38. In this arrangement the microprocessor controller 33 continually monitors the state of polarisation of the incoming signal. Accordingly the microprocessor controller 33 is also connected to an alarm circuit 39 and it programmed to raise an alarm when the input signal varies in a predetermined manner. The set of predetermined conditions to be met before an alarm is raised can include the rate of change of polarisation, the magnitude of change and the duration of change.

Both of the techniques used in the embodiments of Figures 2 and 3 have the advantage that the signals to be used for the alarm are already present and thus implementation of the alarm is relatively simple.

**Claims**

1. Apparatus for monitoring optical fibres in an optical fibre data transmission system, the apparatus being characterised in that it comprises means (12, 13, 14 or 39) for detecting variations in the polarisation of light being transmitted through the optical fibre.

2. Apparatus as claimed in Claim 1 and characterised in that it is used for monitoring an optical fibre in an optical system using non-coherent light, the apparatus comprising a passive splitter (2) one arm (4) of which is taken to a polarisation beam splitter (5), and wherein one arm (6) of the polarisation beam splitter is connected to conversion means (7, 8, 9, 10, 11, 12, 13, 14) for converting fluctuations in the output of that arm into voltage fluctuations.

3. Apparatus as claimed in Claim 2 and further characterised in that the output of said conversion means is connected to a high pass filter (9) operative to remove all polarisation fluctuations caused by natural changes in the fibre characteristic.

4. Apparatus as claimed in Claim 3 and further characterised in that the filtered signal is amplified in a gain stage (10) and the amplified signal compared by a comparator (11) with a preset reference voltage.

5. Apparatus as claimed in Claim 4 and further characterised in that changes of state of the comparator (11) are counted by a counter (12) and a timer (13) is triggered by the first output change of the comparator (11), the timer (13) causing the counter (12) to be read after a predetermined delay so as to trigger an alarm (14) if the count of the counter (12) exceeds a preset value.

6. Apparatus as claimed in Claim 1 and characterised in that the fibre optic being monitored is part of a coherent optical data transmission system, and comprising means (21) for splitting the incoming signal into two orthogonal states of polarisation.

7. Apparatus as claimed in Claim 6 and further characterised in that it includes an oscillator (22) the output of which is also split by polarisation beam splitters (23) into two orthogonal states, the outputs from the two beam (21,23) splitters being mixed to provide a pair of signals one of which is horizontally polarised and the other of which is vertically polarised which are connected to a pair of receivers (26,27).

8. Apparatus as claimed in Claim 7 and characterised in that the outputs of said two receivers (26, 27) are combined in a maximum ratio combiner (28) the output of which is used to compensate for fluctuations in polarisation.

9. Apparatus as claimed in Claim 1 and characterised in that the optical fibre to be monitored carries light in a coherent data transmission system and comprises a local oscillator (31), a polarisation control device (32) for controlling the state of polarisation of the local oscillator (31), the polarisation control device (32) comprising several elements, a micro-processor (33) controlling the application of a control voltage to each of the elements of the polarisation control device (32) with the control signal to each element having a small dither signal different from all of the other control voltages, the micro-processor (33) adjusting the elements in the polarisation control device (32) to match the polarisation state of the local oscillator (31) to that of the incoming signal.

10. Apparatus as claimed in Claim 9 and characterised in that the output of the polarisation control device (32) and the incoming signal are combined in an optical fibre coupler (34) and taken to a balanced receiver (35) the output of which is amplified (36), the output of the amplifier (36) being connected to a dither frequency detection circuit (38).

11. Apparatus as claimed in Claim 10 and further characterised in that the micro-processor (33) is connected to an alarm circuit (39) and is programmed to raise an alarm when the input signal varies in a pre-determined manner.

# Fig. 1.

POLARISATION FLUCTUATION DETECTOR

EP 0 469 720 A2

# Fig. 2.

# Fig.3.

OPTICAL FIBRE COUPLER

SIGNAL IN → 30

BALANCED RECEIVER — 35

AMPLIFIER — 36

37 → DATA OUTPUT

34

POLARISATION CONTROL DEVICE — 32

MICRO PROCESSOR CONTROLLER — 33

DITHER FREQUENCY DETECTION — 38

LOCAL OSCILLATOR — 31

ALARM CIRCUIT — 39

EP 0 469 720 A2